# DEMANDE DE BREVET EUROPEEN

(11) **EP 3 943 280 A1**
(43) Date de publication de la demande: **26.01.2022**
(21) Numéro de dépôt: 21186389.9
(22) Date de dépôt: 19.07.2021
(51) Int. Cl.: B29C 65/48

(54) **ASSEMBLAGE BORD À BORD DE PIÈCES DE CARROSSERIE**

(30) Priorité: 22.07.2020 FR 2007676
(71) Demandeur: Compagnie Plastic Omnium SE, 69007 Lyon (FR)
(72) Inventeur: TRESSE, David, 01150 SAINTE-JULIE (FR)
(74) Mandataire: LLR

(57) **Abrégé**

L'invention concerne un ensemble (10) d'au moins une première pièce (20) de carrosserie en matière plastique et d'une deuxième pièce (30) de carrosserie en matière plastique, caractérisé en ce que :
- la première pièce comporte une tranche (24) et une face visible (22) reliées entre elles par une jonction (26) ;
- la deuxième pièce (30) est en matière plastique transparente ou translucide, et comporte une tranche (34) et une face visible (32) reliées entre elles par une jonction (36) ;
- la première et la deuxième pièces (20, 30) sont assemblées de manière solidaire par contact sur leurs tranches respectives (24, 34) ; et
- les jonctions (26, 36) de la première pièce (20) et de la deuxième pièce (30) s'épousent sur toute leur longueur et présentent des rayons de courbure aptes à rendre une ligne de séparation entre les deux pièces (20, 30) pratiquement indiscernable à l'œil nu.

## Description

La présente invention concerne le domaine de l'automobile, et notamment le domaine des pièces de carrosserie automobile. L'invention concerne en particulier un ensemble comprenant au moins une première pièce de carrosserie en matière plastique, et une deuxième pièce de carrosserie réalisée en matière plastique transparente ou translucide.

Les carrosseries de véhicules, par exemple d'automobiles, sont réalisées en plusieurs pièces qui sont assemblées entre elles. Ces pièces sont par exemple une aile, un parechoc. Ces pièces sont visibles de l'extérieur, c'est-à-dire par un observateur se tenant hors du véhicule. Il est donc crucial que la ligne de séparation (jeu d'accostage) entre deux pièces adjacentes quelconques soit la moins discernable possible à l'œil nu pour un tel observateur.

Actuellement, les pièces de carrosserie sont soit moulées lorsqu'elles sont en matière plastique, soit embouties lorsqu'elles sont en tôle métallique.

Pour les pièces moulées, de par le phénomène de retrait de la matière lors du refroidissement (lors du processus d'injection), la face visible de la pièce présente nécessairement un bord pièce arrondi.

Il s'avère que cet arrondi permet d'éviter la formation sur la pièce d'un bourrelet de peinture excédentaire et disgracieux le long de ce bord pièce (effet de bord lors du dépôt de la peinture), lorsque la pièce reçoit sur sa face visible une couche de peinture, ou un autre revêtement de finition.

Les bords arrondis présentent cependant l'inconvénient d'augmenter le jeu perçu du côté de la face visible entre deux pièces assemblées adjacentes, ce qui est indésirable pour des raisons d'aérodynamisme et d'esthétique.

Une solution afin de limiter le jeu perçu par un utilisateur extérieur, décrite dans la demande de brevet FR 3 029 826, consiste à découper deux pièces de carrosserie en matière plastique selon des formes complémentaires et à les assembler le long de leurs tranches respectives, à l'aide d'un élément d'assemblage qui va être placé à la jonction des deux pièces, sur leurs faces non visibles depuis l'extérieur du véhicule.

Afin de pouvoir installer derrière les pièces de carrosserie des équipements qui doivent être visibles depuis l'extérieur du véhicule, tels que des écrans, ou des dispositifs lumineux, ou qui doivent voir à travers ces pièces de carrosserie, tels que des caméras, on souhaite disposer de pièces de carrosserie en partie transparentes ou translucides, qui permettent la visibilité des équipements depuis l'extérieur ou ne gênent pas leur bon fonctionnement. Par exemple, pour installer une caméra derrière une pièce de carrosserie, celle-ci doit être au moins en partie transparente afin de permettre à la caméra de filmer ce qu'il se passe à l'extérieur du véhicule.

La solution d'assemblage de deux pièces de carrosserie, bien que satisfaisante pour la liaison de deux pièces opaques, est imparfaite dans le cas où l'une des deux pièces de carrosserie est réalisée en matière plastique transparente ou translucide car l'élément d'assemblage mentionné plus haut, qui déborde sous la pièce transparente ou translucide, nuit au bon fonctionnement des équipements placés sous la pièce, et nuit à l'esthétique extérieure du véhicule car l'élément d'assemblage serait visible en dessous de la pièce transparente ou translucide.

Une autre solution, qui consiste à utiliser une pièce transparente ou translucide monobloc, puis à peindre la pièce en marouflant la partie de celle-ci qui devra être transparente ou translucide, afin qu'elle ne soit pas recouverte de peinture. Cette solution pose des problèmes parce que :
- la limite entre la partie peinte et la partie transparente ou translucide de la pièce n'est pas suffisamment nette ;
- il est difficile de développer des peintures qui soient compatibles avec une matière plastique transparente ou translucide (telle que du polycarbonate) et suffisamment résistantes pour être utilisées sur une pièce de carrosserie de véhicule ;
- cette solution nécessite deux passages en ligne de peinture avec une gamme de peinture à une couleur de ton caisse et une gamme de vernis uniquement sur la zone transparente ou translucide, avec un marouflage en plus.

La présente invention vise à remédier aux inconvénients mentionnés plus haut.

L'invention vise à proposer un ensemble comprenant une première pièce de carrosserie en matière plastique et une deuxième pièce de carrosserie en matière plastique transparente ou translucide et dans lequel le jeu perçu entre les jonctions de ces pièces puisse être minimisé.

À cet effet, l'invention a pour objet un ensemble d'au moins une première pièce de carrosserie en matière plastique et d'une deuxième pièce de carrosserie en matière plastique. La première pièce comporte une tranche et une face visible reliées entre elles par une jonction, et la deuxième pièce est en matière plastique transparente ou translucide, et comporte une tranche et une face visible reliées entre elles par une jonction. La première et la deuxième pièces sont assemblées de manière solidaire par contact sur leurs tranches respectives, le désaffleurement entre les faces visibles étant sensiblement nul, et les jonctions de la première pièce et de la deuxième pièce s'épousent sur toute leur longueur et présentent des rayons de courbure aptes à rendre une ligne de séparation entre les deux pièces pratiquement indiscernable à l'œil nu.

Une ligne de séparation entre deux pièces est pratiquement indiscernable à l'œil nu, lorsqu'un observateur, se tenant hors du véhicule et observant à l'œil nu l'ensemble de la première pièce et de la deuxième pièce, ne distingue pas les défauts d'alignement de la ligne de séparation (jeu d'accostage) entre les deux pièces adjacentes, donnant donc l'impression à l'observateur que l'ensemble est composé d'une unique pièce en partie opaque et en partie transparente ou translucide.

Par pièce transparente on entend une pièce dont la transmission de la lumière visible est supérieure à 70%. En d'autres termes, le matériau transparent de la pièce laisse passer la lumière en ligne droite, et les objets sont clairement distingués au travers de celle-ci. Par pièce translucide on entend une pièce dont la transmission de la lumière visible est comprise entre 50% et 70%. En d'autres termes, les rayons lumineux traversant le matériau translucide de la pièce sont en partie diffusés à travers le matériau ou réfléchis de manière diffuse. Une autre partie du rayonnement incident est transmise à travers le matériau en ligne droite. Ainsi, un objet vu à travers une pièce en matériau translucide est flouté.

Par le terme jonction, on entend une zone de transition entre la tranche et la face pouvant être assimilée à une arrête vive ou arrondie (avec un rayon de courbure très faible) de la pièce concernée.

Par l'expression « la jonction de la première pièce et la jonction de la deuxième pièce s'épousent sur toute leur longueur », on entend que les jonctions de chaque pièce ont des formes complémentaires, ou en d'autres termes qu'elles suivent une même ligne d'accostage : les formes se suivent étroitement tout le long de la ligne séparant les deux pièces. Il peut y avoir contact entre les jonctions, lorsque les jonctions forment une arête vive, et il peut ne pas y avoir contact, lorsque les jonctions forment des surfaces arrondies (arêtes arrondies).

L'invention permet d'avoir un ensemble comprenant deux pièces de carrosserie, pouvant être visibles depuis l'extérieur du véhicule, dont l'une est transparente ou translucide. Dans l'ensemble selon l'invention, l'affleurement entre les faces de la première pièce et de la deuxième pièce est optimal, ce qui est particulièrement avantageux lorsque ces faces sont visibles, c'est-à-dire destinées à être tournées vers l'extérieur du véhicule. Le jeu en tout point de l'accostage entre les deux pièces au niveau de leurs jonctions respectives est donc suffisamment faible pour être très difficilement discernable par un observateur extérieur, que ce soit à la vue ou au toucher. L'ensemble selon l'invention donne donc l'impression à un observateur qu'il est composé d'une unique pièce en partie opaque et en partie transparente ou translucide.

L'ensemble selon l'invention permet également l'intégration d'équipements derrière la pièce transparente ou translucide. De plus, l'assemblage des deux pièces de manière solidaire le long de leurs tranches respectives avec leurs jonctions s'épousant sur toute leur longueur permet de se passer de l'utilisation d'un élément d'assemblage qui serait visible depuis l'extérieur du véhicule et pourrait empêcher le bon fonctionnement des équipements installés sous la pièce.

L'ensemble peut en outre comporter l'une ou plusieurs des caractéristiques suivantes, prises seules ou en combinaison :
- la jonction de la première pièce et la jonction de la deuxième pièce présentent chacune un rayon de courbure inférieur à 0,3 millimètres ;
- la première et la deuxième pièces sont assemblées de manière solidaire sur leurs tranches respectives par soudo-collage ;
- la première pièce comprend une face non visible opposée à la face visible et dans laquelle la deuxième pièce comprend un rebord étagé en regard de la tranche de la deuxième pièce en contact avec la face non visible de la première pièce ;
- la première pièce comprend une face non visible comprenant une nervure prolongeant la tranche de la première pièce et dans lequel la deuxième pièce comprend une face non visible comprenant une nervure prolongeant la tranche de la deuxième pièce ;
- la première pièce de carrosserie est peinte ;
- la deuxième pièce de carrosserie est vernie.

L'invention concerne également un procédé de fabrication d'un ensemble selon l'invention qui comprend les étapes de :
- fourniture de la première pièce et de la deuxième pièce ;
- assemblage de manière solidaire sur leurs tranches respectives de la première pièce et de la deuxième pièce par soudo-collage.

Le procédé peut en outre comporter l'une ou plusieurs des caractéristiques suivantes, prises seules ou en combinaison :
- l'étape de fourniture de la première pièce est réalisée par moulage par injection de la première pièce, la jonction présentant dans un plan perpendiculaire à ladite jonction, un rayon de courbure inférieur à 0,3 millimètres issu directement du moulage, et dans lequel l'étape de fourniture de la deuxième pièce est réalisée par moulage par injection de la deuxième pièce, la jonction présentant dans un plan perpendiculaire à ladite jonction, un rayon de courbure inférieur à 0,3 millimètres issu directement du moulage ;
- l'étape de fourniture de la première pièce est réalisée en déposant la première pièce sur un dispositif de maintien et durant laquelle on crée sur la première pièce à l'aide d'un équipement de découpe la tranche dont la jonction au niveau de la face visible présente un angle vif, et dans lequel l'étape de fourniture de la deuxième pièce est réalisée en déposant la deuxième pièce sur un dispositif de maintien, et durant laquelle on crée sur la deuxième pièce à l'aide d'un équipement de découpe la tranche dont la jonction au niveau de la face visible présente un angle vif ;
- l'assemblage des deux pièces est réalisé par soudo-collage ;
- le soudo-collage est réalisé par capillarité à l'aide d'un solvant ;
- on crée, lors de l'étape de fourniture de la deuxième pièce sur le rebord étagé (38) en regard de la tranche de la deuxième pièce avec un équipement de découpe, une surface de contact sur laquelle est assemblée la face non visible de la première pièce 20) ;
- antérieurement à l'étape d'assemblage des première et deuxième pièces, on peint la face visible de la première pièce ;
- antérieurement à l'étape d'assemblage des première et deuxième pièces, on vernit la deuxième pièce.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un ensemble selon le premier mode de réalisation de l'invention ;
[Fig. 2] la figure 2 est une vue en perspective de deux pièces de carrosserie avant leur assemblage selon le premier mode de réalisation de l'invention ;
[Fig. 3] la figure 3 est une vue en perspective de deux pièces de carrosserie issues de moulage, avant la création de tranches sur les pièces selon un premier mode de réalisation de l'invention ;
[Fig. 4] la figure 4 est un ensemble de vues (4a, 4b et 4c) illustrant le procédé selon l'invention ;
[Fig. 5] la figure 5 est une vue en perspective de deux pièces de carrosserie avant la création de tranches sur les pièces, selon un deuxième mode de réalisation ;
[Fig. 6] la figure 6 est une vue en perspective de deux pièces de carrosserie avant leur assemblage selon le deuxième mode de réalisation de l'invention ;
[Fig. 7] la figure 7 est une vue en perspective d'un ensemble selon le deuxième mode de réalisation de l'invention ;
[Fig. 8] la figure 8 est une vue en perspective de deux pièces de carrosserie avant la création de tranches sur les pièces selon un troisième mode de réalisation ;
[Fig. 9] la figure 9 est une vue en perspective de deux pièces de carrosserie avant leur assemblage selon le troisième mode de réalisation de l'invention ;
[Fig. 10] la figure 10 est une vue en perspective d'un ensemble selon le troisième mode de réalisation de l'invention ;
[Fig. 11] la figure 11 est une vue en perspective de deux pièces de carrosserie avant leur assemblage selon une variante du troisième mode de réalisation de l'invention ;
[Fig. 12] la figure 12 est une vue en coupe d'une pièce de carrosserie montrant une jonction et son rayon de courbure.

### Description détaillée

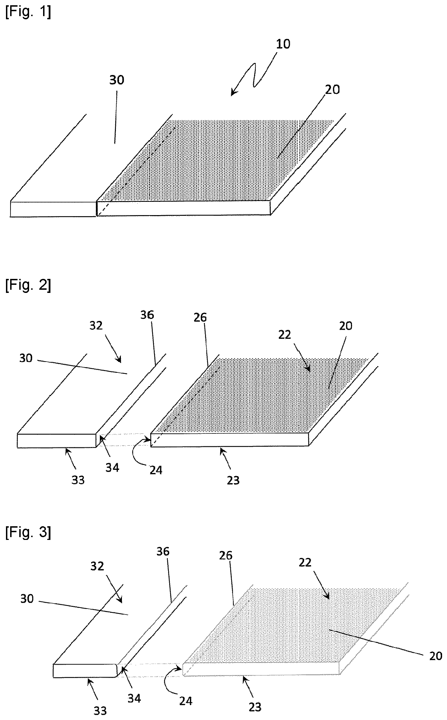

On se réfère maintenant à la figure 1 qui représente un exemple d'un premier mode de réalisation d'un ensemble 10 selon l'invention. Cet ensemble 10 comprend une première pièce 20 de carrosserie en matière plastique, et une deuxième pièce 30 de carrosserie en matière plastique transparente ou translucide. Les deux pièces 20 et 30 sont assemblées bord à bord de façon à minimiser le jeu perçu entre les jonctions de ces pièces.

On se réfère maintenant à la figure 2 qui illustre les deux pièces de carrosserie 20 et 30 de la figure 1 avant leur assemblage. La première pièce de carrosserie 20 comprend :
- une face 22 visible, c'est-à-dire destinée à être tournée vers l'extérieur du véhicule lorsque la pièce de carrosserie est montée sur un véhicule automobile ;
- une tranche 24 ; une tranche est une surface que présente un objet, la pièce 20, dans le sens de l'épaisseur ;
- une jonction 26 constituant une zone (surface ou arrête) de jonction entre la tranche 24 et la face visible 22.

La deuxième pièce de carrosserie 30 comprend :
- une face 32 visible, c'est-à-dire destinée à être tournée vers l'extérieur du véhicule lorsque la pièce de carrosserie est montée sur un véhicule automobile ;
- une tranche 34 ; une tranche est une surface que présente un objet, la pièce 30, dans le sens de l'épaisseur ;
- une jonction 36 constituant une zone (surface ou arrête) de jonction entre la tranche 34 et la face visible 32.

La jonction 26 présente un rayon de courbure apte à rendre la ligne de séparation entre les deux pièces 20, 30 pratiquement indiscernable à l'œil nu.

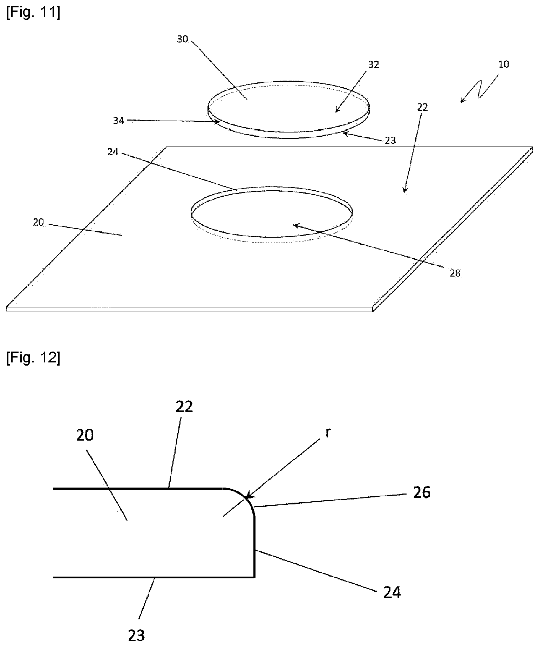

Selon un mode de réalisation, la jonction 26 présente un rayon de courbure inférieur à 0,3 millimètre, c'est-à-dire que la jonction 26 constitue une surface galbée dont la section transversale présente un rayon de courbure r inférieur à 0,3 millimètre. La figure 12 présente une vue en coupe de la première pièce 20 suivant un plan à la fois perpendiculaire à la tranche 24 et à la face visible 22. Elle montre la jonction 26 entre la tranche 24 et la face visible 22, ainsi que le rayon de courbure r que présente la jonction 26. Ainsi, la jonction 26 de la première pièce 20 est légèrement arrondie, mais avec un rayon de courbure très faible lui donnant l'aspect d'un angle vif pour un observateur extérieur au véhicule. De façon avantageuse, le rayon de courbure est nul, c'est-à-dire que la jonction 26 constitue une arrête nette, et non une surface galbée, formant un angle vif entre la face visible 22 et la tranche 24. De préférence l'angle vif est un angle droit.

De même, la jonction 36 présente un rayon de courbure apte à rendre la ligne de séparation entre les deux pièces 20, 30 pratiquement indiscernable à l'œil nu.

Selon un mode de réalisation, la jonction 36 présente un rayon de courbure inférieur à 0,3 millimètre, c'est-à-dire que la jonction 36 constitue une surface galbée dont la section présente un rayon de courbure inférieur à 0,3 millimètre. La géométrie de la deuxième pièce 30 est semblable à celle présentée pour la première pièce en figure 12. Ainsi, la jonction 36 de la deuxième pièce 30 est légèrement arrondie, mais avec un rayon de courbure très faible lui donnant l'aspect d'un angle vif pour un observateur extérieur au véhicule. De façon avantageuse, le rayon de courbure est nul, c'est-à-dire que la jonction 36 constitue une arrête nette, et non une surface galbée, formant un angle vif entre la face visible 32 et la tranche 34. De préférence l'angle vif est un angle droit.

La première pièce 20 et la deuxième pièce 30 sont assemblées de manière solidaire sur leurs tranches respectives 24 et 34, de telle sorte que la tranche 24 et la tranche 34 s'épousent sur toute leur surface. Les surfaces des tranches 24 et 34 ont des aires maximisées du fait que les jonctions 26 et 36 ont un rayon de courbure inférieur à 0,3 mm, voire un rayon de courbure nul.

En d'autres termes, les tranches 24 et 34 des deux pièces de carrosserie 20, 30 forment des surfaces complémentaires, ce qui permet que les deux jonctions 26, 36 s'épousent sur toute leur longueur, avec un jeu perçu quasi nul entre les jonctions de ces pièces 20, 30. Le désaffleurement entre les faces visibles est de préférence sensiblement nul.

Les deux pièces de carrosserie 20, 30 forment ainsi un ensemble 10 solidaire ayant l'apparence extérieure d'une pièce de carrosserie unique entre ses deux parties 20 et 30 d'aspect différent. Cette disposition permet l'installation d'équipements derrière l'ensemble 10, et en particulier derrière la pièce 30 transparente, tels que des écrans visibles depuis l'extérieur du véhicule, des caméras, ou encore des dispositifs lumineux tels que des feux de signalisation, des clignotants ou bien des indicateurs lumineux donnant des informations aux utilisateur du véhicule.

De manière préférentielle, la première pièce de carrosserie 20 est réalisée en polycarbonate ou dans un mélange d'acrylonitrile butadiène styrène et de polycarbonate.

De manière préférentielle, la deuxième pièce de carrosserie 30 est réalisée en polycarbonate ou dans un mélange d'acrylonitrile butadiène styrène et de polycarbonate.

Les deux pièces de carrosserie 20, 30 de l'ensemble 10 sont de préférence liées sur leurs tranches respectives 24, 34 par soudo-collage. Le soudo-collage est une technique de liaison de deux pièces dans lesquelles un solvant est mis en contact des surfaces à lier (dans le cas présent en contact des tranches 24, 34). Les surfaces en question sont soudées grâce à la présence du solvant lorsqu'elles sont placées en regard l'une de l'autre. Le soudo-collage représente une technique permettant une liaison rapide et robuste des deux pièces 20, 30, qui forment ainsi un ensemble 10 solidaire rigidement lié.

Avantageusement, le soudo-collage des deux pièces 20, 30 est réalisé par capillarité du solvant. De cette manière, lors de la confection de l'ensemble 10, les première pièce 20 et deuxième pièce 30 sont placées en contact sur leurs tranches en regard l'une de l'autre avant que le solvant soit déposé sur une face le long de la ligne formant la jonction entre les deux pièces. De préférence, le dépôt du solvant est réalisé sur la face de l'ensemble 10 qui est destinée à être tournée vers l'intérieur du véhicule, afin d'éviter de laisser une trace ou coulure de solvant sur la face visible de l'ensemble, voire d'abimer la face visible avec l'applicateur du solvant. Le solvant pénètre donc par capillarité entre la tranche 24 de la première pièce 20 et la tranche 34 de la deuxième pièce 30. La mise en position des deux pièces l'une par rapport l'autre avant leur soudo-collage, permet d'avoir un ensemble collé avec des pièces parfaitement en position.

Selon un exemple de réalisation, la face visible 22 de la première pièce 20 de carrosserie est peinte. Cette étape de peinture de la face de la pièce 22 a lieu avant l'assemblage de l'ensemble 10. Ainsi, on peut utiliser une gamme de peinture compatible avec la première pièce 20 de carrosserie avant son assemblage, sans avoir à se préoccuper de sa compatibilité avec le matériau de la deuxième pièce 30.

Selon un autre exemple de réalisation, la première face visible 32 de la deuxième pièce 30 de carrosserie est vernie. Le vernis sur cette première face visible 32, qui est destinée à être orientée vers l'extérieur du véhicule, permet de la protéger. Ainsi, la première face visible 32 de la deuxième pièce 30 conserve dans le temps un état de surface convenable.

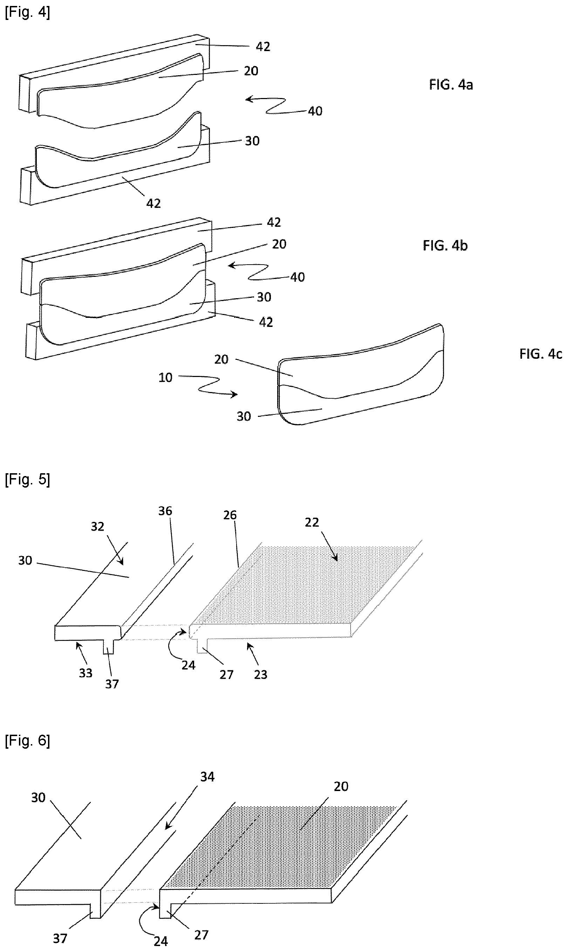

Nous allons maintenant présenter le procédé de fabrication de l'ensemble 10 selon le premier mode de réalisation de l'invention, à l'appui des figures 1, 2 et 3 et de la figure 4.

Le procédé de fabrication de l'ensemble 10 comprend les étapes de :
- fourniture de la première pièce 20 et de la deuxième pièce 30 (figure 3) ;
- assemblage de manière solidaire sur leurs tranches 24, 34 respectives de la première pièce 20 et de la deuxième pièce 30 par soudo-collage (figure 1).

La première pièce 20 est de préférence issue de moulage par injection.

La première pièce 20 est de préférence peinte.

De manière préférée, lors de l'étape de fourniture de la première pièce 20, on fixe la pièce 20 sur un dispositif de maintien 40 (figure 4), qui peut par exemple être un support de fraisage. Ensuite, on crée, par exemple par fraisage, sur la première pièce à l'aide d'un équipement de découpe, la tranche 24 dont la jonction 26 avec la face visible 22 forme un angle vif (figure 2). L'utilisation d'un équipement de découpe pour réaliser la tranche 24 de la première pièce 20 permet l'obtention d'un angle vif le long de la jonction 26. Cela permet donc d'obtenir au final un ensemble ayant l'aspect d'une pièce unique. L'équipement de découpe peut par exemple comprendre une fraise permettant de réaliser la tranche 24 de la première pièce 20. Le fraisage de cette pièce peut être réalisé dans une fraiseuse à commande numérique par exemple. De manière alternative, on peut créer la tranche 24 en utilisant un moyen de découpe à jet d'eau, par découpe à l'aide d'un fil chaud, ou bien par découpe laser. La découpe peut avantageusement être réalisée à l'aide d'un robot.

De manière alternative, l'étape de fourniture de la première pièce peut être réalisée en moulant par injection ladite première pièce 20 dans un moule présentant une arête interne présentant un rayon de courbure faible, permettant de rendre la ligne de séparation entre les deux pièces 20, 30 pratiquement indiscernable à l'œil nu, et de préférence inférieur à 0,3 millimètres. Ce moyen de fourniture de la première pièce 20 permet d'obtenir une première pièce 20 comprenant une jonction 26 présentant, dans un plan perpendiculaire à ladite jonction 26, un rayon de courbure inférieur à 0,3 millimètres. Le moulage par injection représente une alternative rapide et peu coûteuse à la réalisation de la tranche 24 à l'aide d'un équipement de découpe, car elle permet d'obtenir la première pièce 20 à la géométrie voulue en une seule étape de fabrication.

De manière préférée, lors de l'étape de fourniture de la deuxième pièce 30, on fixe la pièce 30 sur un dispositif de maintien 40 (figure 4), qui peut par exemple être un support de fraisage. Ensuite, on crée sur la deuxième pièce 30 à l'aide d'un équipement de découpe, la tranche 34 dont la jonction 36 forme un angle vif (figure 2). L'utilisation d'un équipement de découpe pour réaliser la tranche 34 de la deuxième pièce 30 permet l'obtention d'un angle vif le long de la jonction 36. Cela permet donc d'obtenir au final un ensemble 10 ayant l'aspect d'une pièce unique. L'équipement de découpe peut par exemple comprendre une fraise permettant de réaliser la tranche 34 de la deuxième pièce 30. Le fraisage de cette pièce peut être réalisé dans une fraiseuse à commande numérique par exemple. De manière alternative, on peut créer la tranche 34 en utilisant un moyen de découpe à jet d'eau, ou bien par découpe à l'aide d'un fil chaud. La découpe peut avantageusement être réalisée à l'aide d'un robot.

De manière alternative, l'étape de fourniture de la deuxième pièce peut être réalisée en moulant par injection ladite deuxième pièce 30 dans un moule présentant une arrête interne présentant un rayon de courbure faible, permettant de rendre la ligne de séparation entre les deux pièces 20, 30 pratiquement indiscernable à l'œil nu, de préférence inférieur à 0,3 millimètres. Ce moyen de fourniture de la deuxième pièce 30 permet d'obtenir une deuxième pièce 30 comprenant une jonction 36 présentant, dans un plan perpendiculaire à ladite jonction 36, un rayon de courbure inférieur à 0,3 millimètres. Le moulage par injection représente une alternative rapide et peu coûteuse à la découpe de la tranche 34 à l'aide d'un équipement de découpe, car elle permet d'obtenir la deuxième pièce 30 à la géométrie voulue en une seule étape de fabrication.

De manière préférée, lors de l'étape de fourniture de la première pièce 20 et de la deuxième pièce 30, la première pièce 20 et la deuxième pièce 30 sont toutes les deux fixées sur le dispositif de maintien 40 (figure 4a). Dans ce cas le dispositif de maintien 40 comprend deux supports 42, un par pièce à maintenir. Ensuite les tranches 24, 34 des deux pièces 20, 30 sont créées à l'aide de l'équipement de découpe. La création des deux tranches 24, 34 à l'aide de l'élément de découpe quand celles-ci sont fixées sur le même dispositif de maintien 40 permet d'augmenter la précision relative dans l'usinage des tranche 24, 34, car on a un même référencement géométrique avec le moyen de découpe pour les deux pièces 20, 30. Ainsi, celle-ci seront plus complémentaires géométriquement et les jonctions 26, 36 des deux pièces 20, 30 s'épouseront plus facilement sur toute leur longueur.

De manière préférée, les deux supports 42 sont ensuite rapprochés, par le dispositif de maintien 40, afin de mettre la tranche 24 de la première pièce 20 et la tranche 34 de la deuxième pièce 30 en contact l'une de l'autre et procéder à l'étape d'assemblage (figure 4b). Ce moyen de rapprochement permet d'avoir les deux tranches 24 et 34 ainsi que les deux jonctions 26, 36 parfaitement positionnés avant leur assemblage, ce qui permet un meilleur placement des deux pièces 20, 30 l'une par rapport à l'autre lors dans l'ensemble 10 assemblé, car de préférence les pièces ne sont pas démontées après découpe pour être positionnées sur un autre équipement de collage. Cette disposition renforce donc l'impression pour un observateur d'avoir un ensemble 10 réalisé d'un seul tenant.

Les deux pièces de carrosserie 20, 30 de l'ensemble 10 sont liées sur leurs tranches respectives 24, 34 par soudo-collage. Le soudo-collage est une technique de liaison de deux pièces dans lesquelles un solvant est mis en contact des surfaces à lier (dans le cas présent en contact des tranches 24, 34). Les surfaces en question sont soudées grâce à la présence d'un solvant lorsqu'elles sont placées en regard l'une de l'autre. Le soudo-collage représente une technique permettant une liaison rapide et robuste des deux pièces 20, 30, qui forment ainsi un ensemble 10 solidaire rigidement lié.

Avantageusement, le soudo-collage des deux pièces 20, 30 est réalisé par capillarité du solvant. De cette manière, lors de la confection de l'ensemble 10, les première pièce 20 et deuxième pièce 30 sont placées en regard l'une en face de l'autre en contact sur leurs tranches avant que le solvant soit déposé sur une face le long d'une jonction entre les deux pièces. De préférence, le dépôt du solvant est réalisé sur la face de l'ensemble 10 qui est destinée à être tournée vers l'intérieur du véhicule, afin d'éviter de laisser une trace ou coulure de solvant sur la face visible de l'ensemble, voire d'abimer la face visible avec l'applicateur du solvant Le solvant pénètre donc par capillarité entre la tranche 24 de la première pièce 20 et la tranche 34 de la deuxième pièce 30. Ainsi, la mise en position des deux pièces l'une par rapport l'autre avant leur soudo-collage, ce qui permet d'avoir un ensemble collé avec des pièces parfaitement en position.

De manière avantageuse, la première face visible 22 de la première pièce 20 est peinte.

Par exemple, cette étape a lieu après le moulage, et avant l'étape de découpe (si la pièce est découpée) et d'assemblage de manière solidaire des deux pièces. Ainsi, la première pièce peut être peinte suivant une gamme de peinture compatible avec le matériau la composant et compatible avec les normes la qualité et la robustesse nécessaires pour une pièce de carrosserie. La peinture de cette pièce 20 étant réalisée sur la pièce isolée, il n'y a également pas besoin de procéder à une étape de marouflage de la deuxième pièce 30 afin de la protéger de la peinture appliquée sur la première pièce 20. Cette disposition permet donc un gain de temps et une économie.

De manière avantageuse, la deuxième pièce 30 est vernie.

Par exemple, cette étape à lieu après le moulage, et avant l'étape d'assemblage de manière solidaire des deux pièces. Ainsi, la deuxième pièce 30 peut être vernie suivant une gamme de vernissage compatible avec le matériau la composant et compatible avec les normes la qualité et la robustesse nécessaires pour une pièce de carrosserie. Le vernissage de cette pièce 30 étant réalisée sur la pièce isolée, il n'y a également pas besoin de procéder à une étape de marouflage de la première pièce 20 afin de la protéger du vernis appliqué sur la deuxième pièce 30. Cette disposition permet donc un gain de temps et une économie. De préférence, l'étape de vernissage a lieu avant l'étape de découpe de la tranche 34 (lorsque la tranche 34 est découpée).

Nous allons maintenant décrire un second mode de réalisation de l'invention à l'appui des figures 5, 6 et 7. Nous ne décrirons ici que les éléments qui diffèrent de l'élément 10 décrit dans le premier mode de réalisation de l'invention.

Dans ce mode de réalisation, la première pièce 20 comporte une tranche 24 qui est plus épaisse que l'épaisseur de la paroi de la première pièce 20, car la première pièce 20 comporte une nervure 27 s'étendant le long et en retrait de la tranche 24 de la première pièce 20. Cette nervure 27 s'étend dans une direction sensiblement perpendiculaire à la deuxième face 23 de la première pièce 20. La nervure 27 de la première pièce 20 permet après découpe d'accroitre l'épaisseur de la tranche 24, augmentant donc la surface de celle-ci.

La deuxième pièce 30 comporte une tranche 34 qui est plus épaisse que l'épaisseur de la paroi de la deuxième pièce 30, car la deuxième pièce 30 comporte une nervure 37 s'étendant le long et en retrait de la tranche 34 de la deuxième pièce 30. Cette nervure 37 s'étend dans une direction sensiblement perpendiculaire à la deuxième face 33 de la deuxième pièce 30. La nervure 37 de la deuxième pièce 30 permet après découpe d'accroître l'épaisseur de la tranche 24, augmentant donc la surface de celle-ci.

De cette façon, lorsque les deux pièces 20, 30 sont assemblées de manière solidaire pour former l'ensemble 10, la surface de contact entre les deux pièces 20, 30, constituée par les tranches 24, 34, est agrandie par rapport à celle du premier mode de réalisation présenté, où la tranche est limitée à l'épaisseur de paroi. L'ensemble 10 présente donc une solidité accrue grâce à une surface d'assemblage supérieure. La solution représentée par ce mode de réalisation peut permettre d'augmenter la solidité de l'ensemble, ou bien de fixer ensembles des pièces 20, 30 de faible épaisseur, grâce à leurs tranches 24, 34 respectives étendues.

Nous allons maintenant décrire le procédé de fabrication de l'ensemble 10 selon le second mode de réalisation de l'invention, à l'appui des figures 5, 6 et 7. Nous ne décrirons ici que les éléments du procédé qui diffèrent de celui décrit dans le premier mode de réalisation de l'invention.

La figure 5 présente deux pièces de carrosserie 20, 30 issues de moulage. Ces deux pièces 20, 30 comportent chacune une nervure 27, 37. La tranche 24 de la première pièce 20 et la tranche 34 de la deuxième pièce 30 ne sont pas encore préparées.

Comme précédemment, la première pièce 20 et la deuxième pièce 30 sont placées sur un dispositif de maintien 40. Une tranche 24 est aménagée sur la première pièce 20 à l'aide d'un équipement de découpe. Une tranche 34 est aménagée sur la deuxième pièce 30 à l'aide d'un équipement de découpe. L'équipement de découpe aménage chaque tranche 24, 34 en enlevant de la matière sur la première pièce 20 et sur la deuxième pièce 30. Il découpe la paroi de chaque pièce 20, 30 au moins jusqu'à atteindre la nervure 27 de la première pièce 20 et la nervure 37 de la deuxième pièce 30. Ainsi, chaque tranche 24, 34 est formée à la fois dans l'épaisseur de paroi de chaque pièce 20, 30 et par prolongation dans chaque nervure 27, 37. Chaque tranche forme donc, en extrémité de pièce, une surface continue comprenant la paroi de chaque pièce et chaque nervure 27, 37.

Les tranches 24, 34 de la première pièce 20 et de la deuxième pièce 30 sont ensuite amenées en contact avant d'être assemblées de manière solidaire par soudo-collage. Les différents moyens d'assemblage des deux pièces qui avaient été décrits pour le premier mode de réalisation peuvent être utilisés pour assembler les deux pièces 20, 30.

De manière alternative, la première pièce 20 et/ou la deuxième pièce 30 peut être obtenue directement en moulage par injection. Suivant cette alternative, la tranche 24 de la première pièce 20 et/ou la tranche 34 de la deuxième pièce 30 vient directement de moulage, sous la forme montrée en figure 6. Ainsi, chaque tranche 24, 34, qui est formée à la fois dans l'épaisseur de paroi de chaque pièce 20, 30 et par prolongation dans chaque nervure 27, 37, est obtenue ici directement de moulage.

Toutes les variantes décrites pour le premier mode de réalisation sont applicables à ce deuxième mode de réalisation.

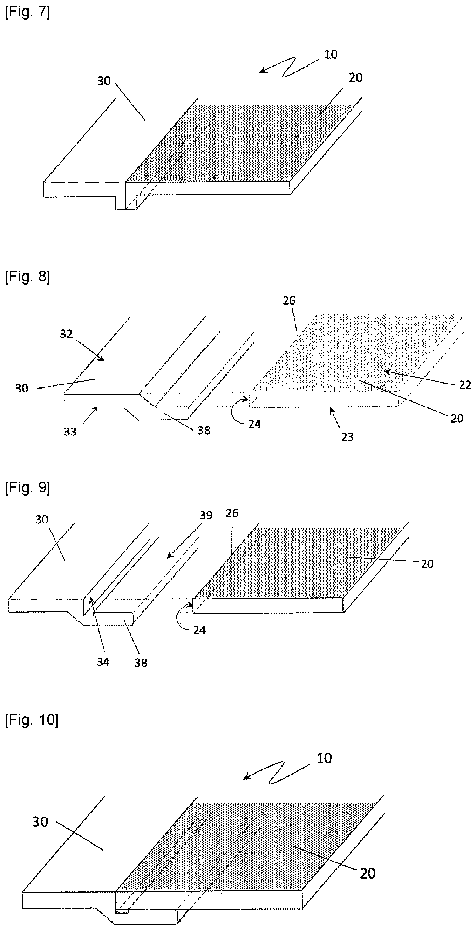

Nous allons maintenant décrire un troisième mode de réalisation de l'invention à l'appui des figures 8, 9 et 10. Nous ne décrirons ici que les éléments qui diffèrent de l'ensemble 10 décrit dans les deux premiers modes de réalisation de l'invention.

Dans l'ensemble 10 selon le troisième mode de réalisation, la première pièce 20 comprend une face non visible 23 opposée à la face visible 22. La deuxième pièce 30 comprend un rebord étagé 38 prolongeant la pièce au-delà de et sous la tranche 34 constituée dans la paroi. Le rebord 38 forme l'extrémité de la deuxième pièce 30 et est globalement positionné sous le niveau de la face non visible 33. Dans ce mode de réalisation, l'assemblage de manière solidaire entre les deux pièces 20, 30 est réalisé à la fois au contact des tranches 24 et 34, et par le contact du rebord 38 contre la face non visible 23 de la première pièce 20. Ce mode d'assemblage des deux pièces 20, 30 représente une alternative avantageuse à celles des premier et deuxième modes de réalisation. Ce mode d'assemblage permet de multiplier et accroitre les surfaces de contact entre les deux pièces 20, 30 et permet donc d'augmenter la rigidité de l'ensemble.

Avantageusement, le rebord 38 comprend une surface de contact 39. Cette surface de contact 39 est en contact avec la face non visible 23 de la première pièce 20.

Avantageusement, les deux pièces 20, 30 sont assemblées par soudo-collage à l'aide d'un solvant déposé par capillarité. De cette manière, lors de la confection de l'ensemble 10, les première pièce 20 et deuxième pièce 30 sont placées en regard l'une en face de l'autre en contact sur leurs tranches comme le montre la figure 10. Dans cette position, les deux tranches 24, 34 sont en contact, et la surface de contact 39 du rebord 38 est en contact avec la face non visible 23 de la première pièce 20.Le solvant permettant le soudo-collage des deux pièces 20, 30 est déposé sur la face non visible 23 de la première pièce 20au niveau de la jonction de celle-ci avec le rebord 38, et au niveau de la jonction entre les deux pièces 20, 30 au niveau de leurs faces visibles 22, 32. Ainsi, les deux-pièces 20, 30 sont soudo-collées au niveau du contact entre leurs tranches 24, 34 et au niveau de la surface de contact 39, à l'endroit où celle-ci est en contact avec la face non visible 23 de la première pièce 20. Cette disposition permet d'augmenter la rigidité de l'ensemble 10.

Nous allons maintenant étudier le procédé de fabrication de l'ensemble 10 selon le troisième mode de réalisation, à l'appui des figures 8, 9 et 10. Nous ne décrirons ici que les éléments du procédé qui diffèrent de ceux décrits dans les premier et deuxième modes de réalisation de l'invention.

La figure 8 présente deux pièces de carrosserie 20, 30 issues de moulage. La deuxième pièce 30 comporte le rebord 38. La tranche 24 de la première pièce 20 et la tranche 34 de la deuxième pièce 30 ne sont pas encore préparées.

Comme précédemment, la première pièce 20 et la deuxième pièce 30 sont placées sur un dispositif de maintien 40. Une tranche 24 est aménagée sur la première pièce 20, à l'aide d'un équipement de découpe. Une tranche 34 est aménagée sur la paroi principale de la deuxième pièce 30, au niveau de l'étagement situé entre les faces 30 et 39, à l'aide d'un équipement de découpe. L'équipement de découpe aménage chaque tranche 24, 34 en enlevant de la matière sur la première pièce 20 et sur la deuxième pièce 30.

Les tranches 24, 34 de la première pièce 20 et de la deuxième pièce 30 sont ensuite amenées en contact avant d'être assemblées de manière solidaire par soudo-collage. Les différents moyens d'assemblage des deux pièces qui avaient été décrits pour le premier mode de réalisation peuvent être utilisés pour assembler les deux pièces 20, 30.

Dans ce mode de réalisation, l'assemblage de manière solidaire de la première pièce 20 et de la deuxième pièce 30 est réalisé également sur le rebord 38. Ainsi, dans le cas d'un soudo-collage réalisé grâce à un solvant, celui-ci peut être déposé sur la face non visible 23 de la première pièce 20 au niveau de la jonction de celle-ci avec le rebord 38, et au niveau de la jonction entre les deux pièces 20, 30 au niveau de leurs faces visibles 22, 32. Ainsi, les deux-pièces 20, 30 sont soudo-collées au niveau du contact entre leurs tranches 24, 34 et au niveau de la surface de contact 39, à l'endroit où celle-ci est en contact avec la face non visible 23 de la première pièce 20. De cette manière, en augmentant les surface de liaison entre les deux pièces 20, 30 on augmente la robustesse de l'ensemble 10.

De manière alternative, la première pièce 20 et/ou la deuxième pièce 30 peut être obtenue directement par moulage par injection. Suivant cette alternative, la tranche 24 de la première pièce 20 et/ou la tranche 34 de la deuxième pièce 30 vient directement de moulage, sous la forme montrée en figure 9. Dans cette alternative, le rebord 38 et la surface de contact 39 sont également issues directement de moulage. Ainsi, suivant cette alternative, les tranches 24, 34, le rebord 38 et la surface de contact 39 ne sont pas réalisées à l'aide d'un équipement de découpe, mais obtenues en une seule étape de moulage, ce qui permet d'obtenir la première pièce 20 et la deuxième pièce 30 à la géométrie voulue en une seule étape de fabrication.

Toutes les variantes décrites pour les premier et deuxième modes de réalisation sont applicables à ce troisième mode de réalisation.

La figure 11 présente une alternative au troisième mode de réalisation. Dans celui-ci, la première pièce 20 comporte une ouverture 28 en forme d'œillet. La deuxième pièce 30 à une forme générale de disque et vient s'insérer dans l'ouverture 28 de la première pièce 20. Toutes les variantes décrites précédemment sont utilisables avec cette variante du troisième mode de réalisation. Dans le cas présenté en figure 11, la deuxième pièce 30 comporte un rebord 38 sur sa tranche 34. La tranche 34 de la deuxième pièce 30 est localisée au niveau de la périphérie de ladite deuxième pièce 30. Lors de l'assemblage des deux pièce 20, 30, la face non visible 23 de la première pièce 20 vient en contact avec le rebord 38 de la deuxième pièce 30. Les tranches 24, 34 des première pièce 20 et deuxième pièce 30 sont aussi en contact. Toutes les variantes décrites précédemment pour les autres modes de réalisation dans l'agencement et dans le processus de fabrication de l'ensemble 10 sont compatibles avec cette variante du troisième mode de réalisation de l'invention.

L'invention n'est pas limitée aux modes de réalisation présentés et d'autres modes de réalisation apparaîtront clairement à l'homme du métier.

### Liste de références

- 10 :: ensemble d'une première et d"une deuxième pièce de carrosserie
- 20 :: première pièce de carrosserie
- 22 :: face visible de la première pièce de carrosserie
- 23 :: face non visible de la première pièce de carrosserie
- 24 :: tranche de la première pièce de carrosserie
- 26 :: jonction de la tranche de la première pièce de carrosserie avec sa face visible
- 27 :: nervure de la première pièce
- 28 :: ouverture de la première pièce
- 30 :: deuxième pièce de carrosserie
- 32 :: face visible de la deuxième pièce de carrosserie : première face de la deuxième pièce de carrosserie destinée à être tournée vers l'extérieur du véhicule
- 33 :: deuxième face de la deuxième pièce (face non visible)
- 34 :: tranche de la deuxième pièce de carrosserie
- 36 :: jonction de la tranche de la deuxième pièce de carrosserie avec sa face visible
- 37 :: nervure de la deuxième pièce
- 38 :: rebord étagé de la deuxième pièce de carrosserie
- 39 :: surface de contact de l'avancée de la deuxième pièce
- 40 :: dispositif de maintien
- 42 :: support, tel qu'un mors
- r :: rayon de courbure de la jonction

## Revendications

1. Ensemble (10) d'au moins une première pièce (20) de carrosserie en matière plastique et d'une deuxième pièce (30) de carrosserie en matière plastique, **caractérisé en ce que** :
- la première pièce comporte une tranche (24) et une face visible (22) reliées entre elles par une jonction (26) ;
- la deuxième pièce (30) est en matière plastique transparente ou translucide, et comporte une tranche (34) et une face visible (32) reliées entre elles par une jonction (36) ;
- la première et la deuxième pièces (20, 30) sont assemblées de manière solidaire par contact sur leurs tranches respectives (24, 34) ; et
- les jonctions (26, 36) de la première pièce (20) et de la deuxième pièce (30) s'épousent sur toute leur longueur et présentent des rayons de courbure aptes à rendre une ligne de séparation entre les deux pièces (20, 30) pratiquement indiscernable à l'œil nu.

2. Ensemble (10) selon la revendication précédente, dans lequel la jonction (26) de la première pièce (20) et la jonction (36) de la deuxième pièce (30) présentent chacune un rayon de courbure inférieur à 0,3 millimètres.

3. Ensemble (10) selon l'une des revendications précédentes, dans lequel la première et la deuxième pièces (20, 30) sont assemblées de manière solidaire sur leurs tranches respectives (24, 34) par soudo-collage.

4. Ensemble (10) selon l'une des revendications précédentes, dans lequel la première pièce (20) comprend une face non visible (23) opposée à la face visible (22) et dans laquelle la deuxième pièce (30) comprend un rebord étagé (38) prolongeant la pièce au-delà de et sous la tranche (34) de la deuxième pièce (30) en contact avec la face non visible (23) de la première pièce (20).

5. Ensemble selon l'une des revendications 1 et 2, dans lequel la première pièce (20) comprend une face non visible (23) comprenant une nervure (27) prolongeant la tranche de la première pièce (20) et dans lequel la deuxième pièce (30) comprend une face non visible (33) comprenant une nervure (37) prolongeant la tranche (34) de la deuxième pièce (30).

6. Ensemble selon l'une des revendications précédentes, dans lequel la première pièce (20) de carrosserie est peinte.

7. Ensemble selon l'une des revendications précédentes, dans lequel la deuxième pièce (30) de carrosserie est vernie.

8. Procédé de fabrication d'un ensemble (10) selon l'une des revendications précédentes qui comprend les étapes de :
- fourniture de la première pièce (20) et de la deuxième pièce (30) ;
- assemblage de manière solidaire sur leurs tranches (26, 36) respectives de la première pièce (20) et de la deuxième pièce (30) par soudo-collage.

9. Procédé selon la revendication précédente, dans lequel l'étape de fourniture de la première pièce (20) est réalisée par moulage par injection de la première pièce (20), la jonction (26) présentant dans un plan perpendiculaire à ladite jonction (26), un rayon de courbure inférieur à 0,3 millimètres issu directement du moulage, et dans lequel l'étape de fourniture de la deuxième pièce (30) est réalisée par moulage par injection de la deuxième pièce (30), la jonction (36) présentant dans un plan perpendiculaire à ladite jonction (36), un rayon de courbure inférieur à 0,3 millimètres issu directement du moulage.

10. Procédé selon la revendication 8, dans lequel l'étape de fourniture de la première pièce (20) est réalisée en déposant la première pièce (20) sur un dispositif de maintien (40) et durant laquelle on crée sur la première pièce (20) à l'aide d'un équipement de découpe la tranche (24) dont la jonction (26) au niveau de la face visible (22) présente un angle vif, et dans lequel l'étape de fourniture de la deuxième pièce (30) est réalisée en déposant la deuxième pièce (30) sur un dispositif de maintien (40), et durant laquelle on crée sur la deuxième pièce (30) à l'aide d'un équipement de découpe la tranche (34) dont la jonction (36) au niveau de la face visible (32) présente un angle vif.

11. Procédé selon l'une des revendications 7 à 9, dans lequel l'assemblage des deux pièces (20, 30) est réalisé par soudo-collage.

12. Procédé selon la revendication précédente, dans lequel le soudo-collage est réalisé par capillarité à l'aide d'un solvant.

13. Procédé selon l'une des revendications 7 à 11 de fabrication d'un ensemble selon l'une des revendications 3 à 5, dans lequel on crée, lors de l'étape de fourniture de la deuxième pièce (30) sur le rebord étagé (38) prolongeant la pièce au-delà de et sous la tranche (34) de la deuxième pièce (30) avec un équipement de découpe, une surface de contact (39) sur laquelle est assemblée la face non visible (23) de la première pièce 20).

14. Procédé selon l'une des revendications 7 à 12, dans lequel, antérieurement à l'étape d'assemblage des première pièce (20) et deuxième pièce (30), on peint la face visible (22) de la première pièce (20).

15. Procédé selon l'une des revendications 7 à 13, dans lequel, antérieurement à l'étape d'assemblage des première pièce (20) et deuxième pièce (30), on vernit la deuxième pièce (30).
